# EUROPEAN PATENT SPECIFICATION

(11) **EP 3 956 596 B1**
(45) Date of publication and mention of the grant of the patent: **18.01.2023**
(21) Application number: 19748773.9
(22) Date of filing: 25.07.2019
(51) Int. Cl.: F16L 37/092, F16L 19/065, F16L 33/22

(54) **HOSE CONNECTOR**
SCHLAUCHANSCHLUSS
RACCORD DE TUYAU

(30) Priority: 18.04.2019 DE 102019002832
(43) Date of publication of application: 23.02.2022
(73) Proprietor: Husqvarna AB, 56182 Huskvarna (SE)
(72) Inventor: RENNER, Thomas, 89079 Ulm (DE)
(74) Representative: Finkele, Rolf
(86) International application number: PCT/EP2019/070130
(87) International publication number: WO 2020/211963

(56) References cited:
- WO-A1-2008/117745
- WO-A1-2011/099186
- JP-A- 2010 065 769
- JP-A- 2011 247 335

## Description

### TECHNICAL FIELD

The present disclosure relates to a hose connector, and more particularly to a coupling mechanism of the hose connector.

### BACKGROUND

One of the necessities for home ownership is a hose for watering lawns, washing cars, etc. The hose is connected to a source of water supply such as a tap or a pump so that water can be delivered through the hose. A hose connector allows quick coupling of the hose with the source of water supply. The hose connector typically includes a body, a clamping nut, and a clamping element. For coupling the hose with the hose connector, the hose is pushed so that the hose is received by the body of the hose connector. In some situations, the hose is not received up to an appropriate length of the body. This is generally because of friction between the body and the hose. If the hose is not properly received by the body, there are chances that the hose may slip out of connection during operation. For example, if the hose experiences an alternating load, there is a high probability that the hose may slip out of connection. Thus, it is important for a user to know whether the hose has been completely received by the body. Hose connectors that are currently available do not provide any indication if the hose has been completely received by the body or not.

EP 2 644 959 A2 describes tube coupling to receive and hold a tube. The coupling comprises a coupling body having a throughway to receive a portion of the tube. A collet in the coupling body has legs with outer surfaces that engage with a tapered surface in the coupling body which urges the legs inwardly to resist withdrawal of the tube. A biasing member provides a biasing force without the tube inserted to urge the legs axially onto the tapered surface. The collet can grip a large variety of pipe diameters. The coupling may be supplied with a number of inserts for sealing with the inner diameter of a pipe, the inserts having different diameters. For sealing purposes prior to being inserted into the coupling body an insert is fitted into the end of the tube. The insert has a throughway which, upon insertion, is aligned with the throughway in the coupling body. The insert is provided towards its end, furthest from the end of the tube, with an O-ring seal, which seals against the coupling body. For this purpose the coupling body exhibits a narrow section, so that the O-ring on the insert by being pushed into it seals against an inner annual wall of the coupling body. The coupling body further includes a window that allows to inspect inserted tube and thus to determine its passage. Although the passage of the tube is a good indication for successful entry, it does not guarantee that a user has inserted the tube far enough that a water tight seal between tube and coupling body is achieved. This is because the window is already fully covered by the tube at a time where the O-ring has not yet entered the narrow section of the coupling body for sealing. Thus a user experience the counterforce when the O-ring reached the front of the narrow section might tend to think that he already fully entered the hose and thus stop further pushing. This then results in non-proper sealing and thus a faulty connection. Just by observing the window there is no chance to distinguish between the case of counterforce due to the O-ring reaching the narrow section of the coupling body and the counterforce due to the tube being fully pushed into the coupling body.

Japanese patent applications JP 2010 065769 A and JP 2011 247 335 A each describe a hose connector on which a clamping nut can be screwed an to secure a hose that is inserted into the connector. Via the opening on the hose connectors body the hose can be observed when being properly inserted.

In a similar manner the hose connectors of the PCT patent applications WO 2011/099186 A1 and WO 2008/117745 A1 allows to control the proper insertion of a hose into the connector. Whereby here the clamping nut when being screwed fully onto the body portion covers the opening and thus allows to control a proper tightening.

### SUMMARY

In view of the above, it is an objective of the present invention to solve or at least reduce the drawbacks discussed above. The objective is at least partially achieved by a hose connector, according to the technical features of claim 1.

The at least one opening indicates to a user whether the hose has been properly received by the second body portion and also whether the clamping nut is properly engaged with the second body portion. Thus, the hose connector of the present invention provides improved functional reliability. The hose connector also allows simplified assembly and disassembly and is simple to use. Further, the at least one opening can be provided in the second body portion without any additional costs.

According to an embodiment of the present invention, the second body portion includes external threads that engage with internal threads on the clamping nut to threadably couple the clamping nut and the second body portion.

According to an embodiment of the present invention, the at least one opening is provided adjacent to the external threads on the second body portion.

Alternative to the case that the at least one opening is not interfering with the internal threads, for example by locating it adjacent to them, it is also possible to realize an embodiment of the invention by forming the at least one opening at les in part with the external threads. As with this embodiment there is no need for additional spacing adjacent to the threads used for the opening the hose connector can be manufactured in a shorter version.

According to the invention the at least one opening opening is triangularly shaped. One also can think of a specific orientation of that triangle.

According to the invention, the orientation of the triangle as such, that the triangle is pointing to the farthest peripheral point of the end section. By this the user of the hose connector is intuitively instructed to enter the hose into the hose connector far enough at least until the hose will be seen in the opening .

According to an embodiment of the present invention, the second body portion includes a plurality of openings that are circumferentially spaced apart from each other.

According to an embodiment of the present invention, the second body portion includes at least four openings.

According to an embodiment of the present invention, the appearance of the hose at least at the first end of the at least one opening is indicative of an accurate mounting of the hose on the first body portion.

According to an embodiment of the present invention, the hose covers at least half of an overall length defined by the at least one opening for indicating the accurate mounting of the hose on the first body portion.

According to an embodiment of the present invention, the covering of the second end of the at least one opening is indicative of an accurate clamping of the hose.

According to an embodiment of the present invention, the second body portion includes a stop edge defined adjacent to the at least one opening.

According to an embodiment of the present invention, the stop edge is embodied as a circular rib extending from an outer surface of the second body portion.

According to an embodiment of the present invention, a first rib provided on the clamping nut rests against the stop edge when the clamping nut is coupled with the second body portion. More particularly, when the clamping nut rests against the stop edge, the user is made aware that the clamping nut has completely engaged with the second body portion and that the hose is properly clamped by the clamping element.

According to an embodiment of the present invention, the clamping nut is adapted to completely cover the second end of at least one opening when the first rib rests against the stop edge.

According to an embodiment of the present invention, a shape of the at least one opening is at least one of rectangular, circular, and elliptical.

According to an embodiment of the present invention, the clamping nut is adapted to restrict a passage of foreign material into the at least one opening, the external threads of the second body portion, and the internal threads of the clamping nut when the clamping nut is coupled with the second body portion. Thus, any possibility of contamination of the external threads of the second body portion by ingress of dirt is eliminated.

According to an embodiment of the present invention, the clamping element includes at least one teeth.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** shows a sectional view of a hose connector.
**FIG. 2** shows a perspective view of a body and a clamping element of the hose connector.
**FIG. 3** shows a side view of the hose connector and a hose received by the hose connector; and
**FIG. 4** shows a side view of the hose connector, wherein the clamping nut is in an engaged state, in accordance with an embodiment of the present invention.
**FIG. 5** shows a hose connector according to the invention and placing of the opening.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, the invention is defined by the appended claims.

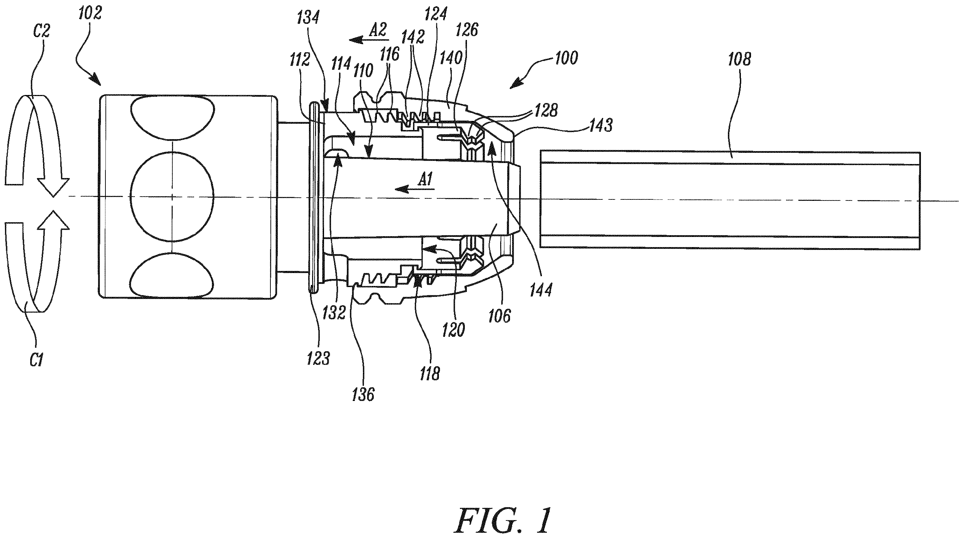

**FIG. 1** shows a sectional view of a hose connector 100. The hose connector **100** may be coupled with a water supply source (not shown) for performing a watering operation. For example, the water supply source may include a tap or a pump outlet. The hose connector **100** includes a body **102**. The body **102** defines a end **104** that may be detachably coupled with the water supply source. The end **104** may be generally tubular in shape. In one example, the end **104** may include internal threads (not shown) that engage with external threads on the water supply source for detachably coupling the hose connector **100** with the source of water supply. In an alternate example, the hose connector **100** may be press fitted to the water supply source, without any limitations.

The body **102** includes a first body portion **106**. The first body portion **106** defines a fluid passage (not shown) that allows water from the water supply source to be introduced in a hose **108** that connects with the hose connector **100**. The hose **108** is received by the first body portion **106** such that the hose **108** contacts an outer surface **110** of the first body portion **106**. Further, the body **102** includes a second body portion **112**. The second body portion **112** is disposed concentrically around the first body portion **106**. More particularly, the first and second body portions **106, 112** are provided such that a gap **114** is defined between the first and second body portions **106, 112.** The hose **108** is received within the gap **114** defined between the first and second body portions **106, 112.**

The second body portion **112** has an annular shape. The second body portion **112** defines a number of external threads **116**. Additionally, the second body portion **112** defines a sliding surface (not shown) disposed at one side of the number of external threads **116**. The second body portion **112** also defines an end section **118** that is disposed towards an entry portion **120** of the gap **114**. Further, the second body portion **112** includes a stop edge **123**. The stop edge **123** is provided adjacent to an opening **132**. The stop edge **123** is embodied as a circular rib extending from an outer surface **134** of the second body portion **112**.

The hose connector **100** includes a clamping element **124**. The clamping element **124** includes a number of clamping claws **126**. Further, the clamping claws **126** include one or more teeth **128** that are defined on an inner surface of the respective clamping claws **126**. In the illustrated embodiment, each clamping claw **126** includes two teeth **128**. Alternatively, each clamping claw **126** may include more than two teeth **128**, without any limitations.

The clamping element **124** is coupled to the second body portion **112**. In one example, the clamping element **124** is coupled to the second body portion **112** through a snap fit arrangement. The clamping element **124** is coupled to the second body portion **112** such that the clamping element **124** is slidable along an axial direction **"A1"** with respect to the second body portion **112**. More particularly, the clamping element **124** is slidably received on the sliding surface thereby allowing an axial movement of the clamping element **124**. Additionally, the clamping element **124** and the second body portion **112** are designed such that the clamping element **124** tilts radially with respect to the second body portion **112**.

In one example, the clamping element **124** is molded on the body **102**. For example, an injection molding process may be used for molding the clamping element **124** on the hose connector **100**. Alternatively, a 2-K injection molding process or an assembly injection molding process may be used for molding the clamping element **124** on the hose connector **100**. In other examples, the clamping element **124** and the hose connector **100** may be manufactured as separate components that are later coupled with each other. As the clamping element **124** is manufactured using cost efficient techniques, the hose connector **100** does not incur significant component production costs. Additionally, installation costs and time associated with the assembly and disassembly of the clamping element **124** with the body **102** is reduced as the clamping element **124** is molded with the body **102**. Further, a material of the body **102** may be different from a material of the clamping element **124**. In an example, the clamping element **124** may be made of polyoxymethylene whereas the body **102** may be made of polypropylene, without any limitations.

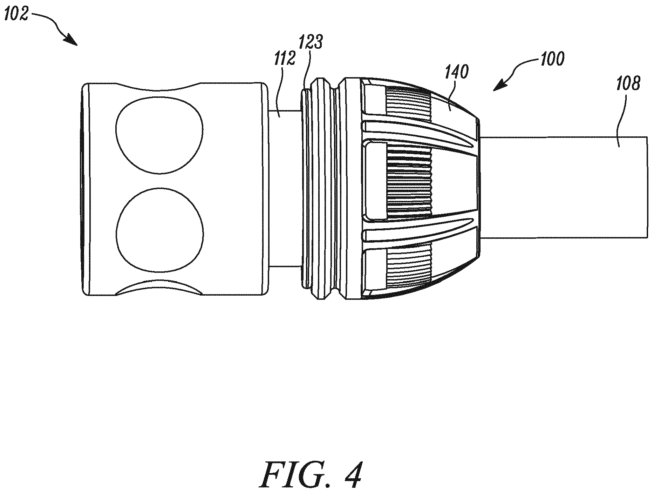

The hose connector **100** also includes a clamping nut **140**. The clamping nut **140** is threadably coupled to the second body portion **112**. Based on a rotation of the clamping nut **140** in a threading direction **"A2"**, the clamping nut **140** may be engaged or disengaged from the second body portion **112**. The clamping nut **140** is shown in an engaged position in **FIG. 4** and in a disengaged position in **FIGS. 1****,** **2****, and** **3**. The clamping nut **140** is said to be in the engaged position when internal threads **142** of the clamping nut **140** engage with the external threads **116** on the second body portion **112**. The clamping nut **140** defines a clamping surface **144**.

Further, the clamping nut **140** includes a tail portion **143**, such that the tail portion **143** applies force on the clamping element **124** when the clamping nut **140** is in the engaged position. As shown in **FIG. 4**, the clamping nut **140** does not apply force on the clamping element **124** such that the clamping element **124** is in a retracted position when the clamping nut **140** is in the disengaged position.

Additionally, the clamping nut **140** includes a first rib **136** that extends from an inner surface **138** of the clamping nut **140**. Alternatively, the first rib **136** may include as a number of ribs that are circumferentially spaced apart from each other. The first rib **136** is embodied as a circular ring extending from the inner surface **138**. when the clamping nut **140** is coupled with the second body portion **112**, the first rib **136** rests against the stop edge **123** thereby indicating that the clamping nut **140** is in the engaged position. Further, in the engaged position of the clamping nut **140**, the clamping nut **140** restricts a passage of foreign material towards the external threads **116** of the second body portion **112** and the internal threads **142** of the clamping nut **140**. Thus, any possibility of contamination of the external threads **116** and the internal threads **142** by ingress of dirt or other foreign materials is eliminated.

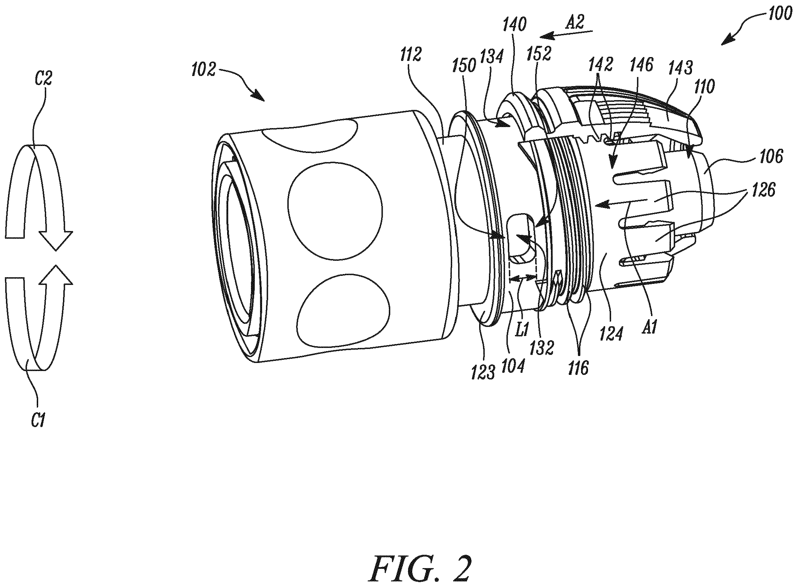

Referring to **FIG. 2**, the hose connector **100** includes one or more openings **132** defined on the second body portion **112**. The openings **132** are embodied as through openings. In the illustrated example, the hose connector **100** includes a number of openings **132** that are circumferentially spaced apart from each other. More particularly, the hose connector **100** includes four openings **132**. Alternatively, the hose connector **100** may include more than four openings or less than four openings, without limiting the scope of the present disclosure. The openings **132** are provided adjacent to the external threads **116** on the second body portion **112**. More particularly, the openings **132** are provided between the stop edge **123** and the external threads **116**.

For explanatory purposes, a single opening **132** of the hose connector **100** will now be described in detail. However, it should be noted that the description provided below is equally applicable to all the openings **132** of the hose connector **100**. The opening **132** may be rectangular, circular, or elliptical in shape. In the illustrated example, the opening **132** is rectangular in shape. The opening **132** extends between a first end **150** and a second end **152**. Further, the first end **150** is defined as a closest peripheral point to the end section **118** on the opening **132**. Whereas, the second end **152** is defined as a farthest peripheral point to the end section **118** on the opening **132**.

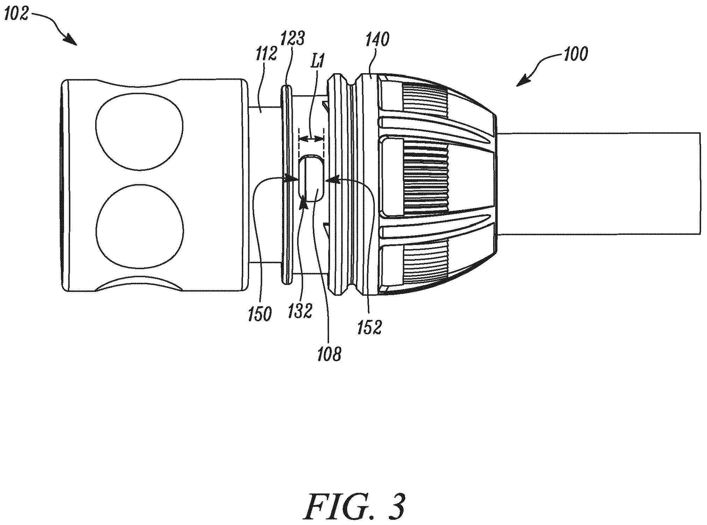

As shown in **FIG. 3**, when the hose **108** is completely locked with the hose connector **100**, the hose **108** is received in the gap **114** such that the hose **108** appears at least at the first end **150**. In some examples, the hose **108** may appear up to half or more than half of an overall length **"L1"** defined by the opening **132**. In another example, the hose **108** may appear up to the second end **152** such that the hose **108** completely covers the opening **132**. The appearance of the hose **108** at the first end **150** of the opening **132** is indicative of an accurate mounting of the hose **108** on the first body portion **106**. More particularly, the appearance of the hose **108** in the opening **132** indicates the accurate mounting of the hose **108** on the first body portion **106**.

Further, when the hose **108** is completely locked with the hose connector **100**, the clamping nut **140** covers the second end **152** of the opening **132**. The covering of the second end **152** of the opening **132** is indicative of an accurate clamping of the hose **108** by the hose connector **100**. The opening **132** indicates to a user whether the hose **108** has been properly received by the first body portion **106** and also whether the clamping nut **140** is properly engaged with the second body portion **112**. Further, the opening **132** provides a cost-effective solution to make the user aware of the correct coupling of the hose **108** with the hose connector **100** without incurring any additional costs.

For coupling the hose **108** with the hose connector **100**, the hose **108** is coupled with the first body portion **106**. More particularly, the hose **108** is pushed till the hose **108** is visible at the first end **150** of the opening **132**, which indicates that the hose **108** has been received up to a sufficient length of the first body portion **106**. The clamping nut **140** is then threadably coupled with the second body portion **112** by rotating the clamping nut **140** in a clockwise direction **"C1"** along the threading direction **"A2"**. As the internal threads **142** of the clamping nut **140** engage with the external threads **116** on the second body portion **112**, the tail portion **143** of the clamping nut **140** applies force on the clamping claws **126**. Thus, the clamping claws **126** are in turn pressed radially inwards towards the hose **108**, thereby applying a holding force on the hose **108**.

Referring to **FIG. 4**, as the clamping nut **140** is coupled with the second body portion **112**, the clamping nut **140** covers the opening **132** (see **FIGS. 2** **and** **3**). The clamping nut **140** is rotated till the opening **132** is completely covered by the clamping nut **140.** More particularly, the clamping nut **140** is rotated till the first rib **136** (see **FIG. 1**) contacts and rests against the stop edge **123**, and the clamping nut **140** completely covers the second end **152** of the opening **132**. The complete covering of the opening **132** indicates that the hose **108** is completely locked with the hose connector **100**.

As shown in **FIG. 1**, when the hose **108** is to be removed from the hose connector **100**, the clamping nut **140** is decoupled from the second body portion **112**. The clamping nut **140** is decoupled by rotating the clamping nut **140** in a counter clockwise direction **"C2"** along a direction that is opposite to the threading direction **"A2".** As the clamping nut **140** is decoupled from the second body portion **112**, the opening **132** is visible, thereby indicating that the clamping nut **140** is in the disengaged position. Further, a disengagement of the internal threads **142** of the clamping nut **140** and the external threads **116** on the second body portion **112** causes the clamping claws **126** to radially spring back to the retracted position as the tail portion **143** no longer applies force on the clamping claws **126**. A spring back action of the clamping claws **126** releases the holding force previously applied by the clamping claws **126** on the hose **108**, thereby allowing easy removal of the hose **108** from the first body portion **106**.

The hose connector **100** disclosed herein provides improved functional reliability. The hose connector **100** allows provides simplified assembly and disassembly and is simple to use. More particularly, the components of the hose connector **100** do not require any prior assembly or disassembly hence the hose connector **100** allows simplified assembly and disassembly of the hose **108** and the hose connector **100.**

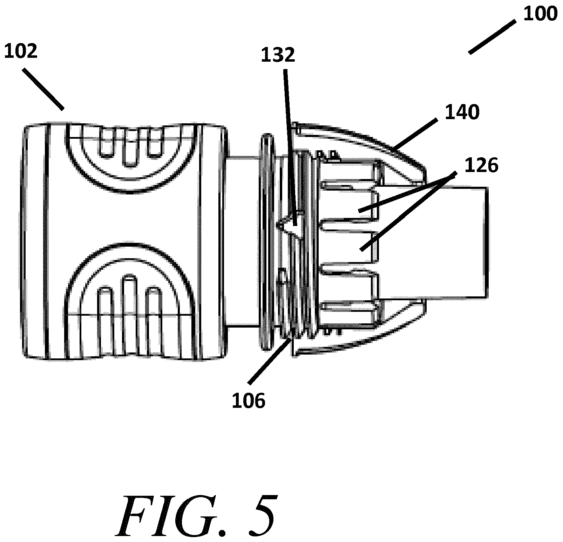

**FIG. 5** shows a hose connector according to the invention and placing of the opening. The major elements of the hose nut are similar to the hose connector already shown and described with figures 1-4. The difference with this particular embodiment is the placing and shape of the opening (**132**). Again the second body portion (**112**) includes external threads (**116**) that engage with internal threads (**142**) on the clamping nut (**140**) to threadedly couple the clamping nut (**140**) and the second body portion (**112**). In the embodiment shown the opening (**132**) is now realized at least in part within the external threads (**116**). As with this the additional spacing adjacent to the threads used for the opening the hose connector can be significantly reduced of even eliminated. Thus the hose connector (**100**) can be manufactured in a shorter version. Also exemplarily the opening (**132**) is triangularly shaped. One can also think of a specific orientation of that triangle, for example choosing the orientation as such, that the triangle is pointing to the farthest peripheral point of the end section (**118**). By this the user of the hose connector is intuitively instructed to enter the hose into the hose connector far enough at least until the hose will be seen in the opening (**132**).

In the drawings and specification, there have been disclosed preferred embodiments and examples of the invention and, although specific terms are employed, they are used in a generic and descriptive sense only and not for the purpose of limitation of the scope of the invention being set forth in the following claims.

### LIST OF ELEMENTS

- **100**: Hose Connector
- **102**: Body
- **104**: End
- **106**: First Body Portion
- **108**: Hose
- **110**: Outer Surface
- **112**: Second Body Portion
- **114**: Gap
- **116**: External Threads
- **118**: End Section
- **120**: Entry Portion
- **123**: Stop Edge
- **124**: Clamping Element
- **126**: Clamping Claws
- **128**: Teeth
- **132**: Opening
- **134**: Outer Surface
- **136**: First Rib
- **140**: Clamping Nut
- **142**: Internal Threads
- **143**: Tail Portion
- **144**: Clamping Surface
- **146**: Outer Surface
- **150**: First End
- **152**: Second End
- **A1**: Axial Direction
- **A2**: Threading Direction
- **C1**: Clockwise Direction
- **C2**: Counter Clockwise Direction
- **L1**: Length

## Claims

1. A hose connector (**100**) comprising:
a body (**102** including:
a first body portion (**106**); and
a second body portion (**112**) disposed concentrically around the first body portion (**106**);
wherein the first body portion (**106**) and the second body portion (**112**) define a gap (**114**) therebetween such that the gap (**114**) is adapted to receive a hose (**108**) therein;
wherein the second body portion (**112**) has an end section (**118**) towards an entry portion (**120**) of the gap (**114**);
a clamping element (**124**) associated to the second body portion (**112**), wherein the clamping element (**124**) includes a plurality of clamping claws (**126**); and
a clamping nut (**140**) threadably coupled to the second body portion (**112**);
wherein the hose connector (**100**) further includes at least one opening (**132**) defined on the second body portion (**112**), the at least one opening (**132**) extending between a first end (**150**) and a second end (**152**), wherein the first end (**150**) is defined as a closest peripheral point to the end section (**118**) of the second body portion (**112**), and the second end (**152**) is defined as a farthest peripheral point to the end section (**118**) of the second body portion (**112**);
and wherein for complete locking of the hose (**108**) with the hose connector (**100**):
the hose (**108**) is adapted to be received in the gap (**114**) such that the hose (**108**) appears at least at the first end (**150**); and
the clamping nut (**140**) is adapted to be threadably coupled to the second body portion (**112**) afterwards such that the clamping nut (**140**) covers the second end (**152**);
**characterized in that**
the opening (**132**) is triangularly shaped with the orientation of the triangle being such, that it is pointing to the farthest peripheral point of the end section (**118**).

2. The hose connector (**100**) of claim 1, wherein the second body portion (**112**) includes external threads (**116**) that engage with internal threads (**142**) on the clamping nut (**140**) to threadably couple the clamping nut (**140**) and the second body portion (**112**).

3. The hose connector (**100**) of claim 2, wherein the at least one opening (**132**) is provided adjacent to the external threads (**116**) on the second body portion (**112**).

4. The hose connector (**100**) of claim 2, wherein the opening (**132**) is realized at least in part within the external threads (**116**).

5. The hose connector (**100**) of any one of the preceding claims, wherein the second body portion (**112**) includes a plurality of openings (**132**) that are circumferentially spaced apart from each other.

6. The hose connector (**100**) of claim 5, wherein the second body portion (**112**) includes at least four openings (**132**).

7. The hose connector (**100**) of any one of the preceding claims, wherein the appearance of the hose (**108**) at least at the first end (**150**) of the at least one opening (**132**) is indicative of an accurate mounting of the hose (**108**) on the first body portion (**106**).

8. The hose connector (**100**) of claim 7, wherein the hose (**108**) covers at least half of an overall length (**L1**) defined by the at least one opening (**132**) for indicating the accurate mounting of the hose (**108**) on the first body portion (**106**).

9. The hose connector (**100**) of claims 7 or 8, wherein the covering of the second end (**152**) of the at least one opening (**132**) by the clamping nut (**140**) is indicative of an accurate clamping of the hose (**108**).

10. The hose connector (**100**) of any one of the preceding claims, wherein the second body portion (**112**) includes a stop edge (**123**) defined adjacent to the at least one opening (**132**).

11. The hose connector (**100**) of claim 10, wherein the stop edge (**123**) is embodied as a circular rib extending from an outer surface (**134**) of the second body portion (**112**).

12. The hose connector (**100**) of claims 10 or 11, wherein a first rib (**136**) provided on the clamping nut (**140**) rests against the stop edge (**123**) when the clamping nut (**140**) is coupled with the second body portion (**112**).

13. The hose connector (**100**) any one of claims 10 to 12, wherein the clamping nut (**140**) is adapted to completely cover the second end (**152**) of the at least one opening (**132**) when the first rib (**136**) rests against the stop edge (**123**).

14. The hose connector (**100**) of any one of the preceding claims, wherein the clamping nut (**140**) is adapted to restrict a passage of foreign material into external threads (**116**) of the second body portion (**112**), and internal threads (**142**) of the clamping nut (**140**) when the clamping nut (**140**) is coupled with the second body portion (**112**).

## Patentansprüche

1. Ein Schlauchverbinder (100), weist auf:
einen Körper (102), der Folgendes umfasst:
einen ersten Körperabschnitt (106); und
einen zweiten Körperabschnitt (112), der konzentrisch um den ersten Körperabschnitt (106) angeordnet ist;
wobei der erste Körperabschnitt (106) und der zweite Körperabschnitt (112) einen Spalt (114) dazwischen definieren, so dass der Spalt (114) eingerichtet ist, um einen Schlauch (108) darin aufzunehmen;
wobei der zweite Körperabschnitt (112) einen Endabschnitt (118) in Richtung eines Eingangsabschnitts (120) des Spalts (114) aufweist;
ein Klemmelement (124), das mit dem zweiten Körperabschnitt (112) verbunden ist, wobei das Klemmelement (124) eine Vielzahl von Klemmklauen (126) umfasst; und
eine Spannmutter (140), die mit dem zweiten Körperabschnitt (112) verschraubt ist;
wobei der Schlauchverbinder (100) ferner mindestens eine Öffnung (132) aufweist, die an dem zweiten Körperabschnitt (112) definiert ist, wobei sich die mindestens eine Öffnung (132) zwischen einem ersten Ende (150) und einem zweiten Ende (152) erstreckt, wobei das erste Ende (150) als ein dem Endabschnitt (118) des zweiten Körperabschnitts (112) am nächsten liegender Umfangspunkt definiert ist, und das zweite Ende (152) als ein dem Endabschnitt (118) des zweiten Körperabschnitts (112) am weitesten entfernter Umfangspunkt definiert ist; und
wobei zur vollständigen Verriegelung des Schlauches (108) mit dem Schlauchverbinder (100):
der Schlauch (108) so ausgelegt ist, dass er in dem Spalt (114) aufgenommen werden kann, so dass der Schlauch (108) zumindest an dem ersten Ende (150) erscheint; und
die Spannmutter (140) so ausgelegt ist, dass sie anschließend mit dem zweiten Körperabschnitt (112) verschraubt werden kann, so dass die Spannmutter (140) das zweite Ende (152) abdeckt
**dadurch gekennzeichnet, dass**
die Öffnung (132) dreieckig geformt ist, wobei die Ausrichtung des Dreiecks so ist, dass sie zum am weitesten entfernten Umfangspunkt des Endabschnitts (118) gerichtet ist.

2. Der Schlauchverbinder (100) nach Anspruch 1, wobei der zweite Körperabschnitt (112) ein Außengewinde (116) aufweist, das in ein Innengewinde (142) an der Spannmutter (140) eingreift, um die Spannmutter (140) und den zweiten Körperabschnitt (112) miteinander zu verschrauben.

3. Der Schlauchverbinder (100) nach Anspruch 2, wobei die mindestens eine Öffnung (132) neben dem Außengewinde (116) am zweiten Körperabschnitt (112) vorgesehen ist.

4. Der Schlauchverbinder (100) nach Anspruch 2, wobei die Öffnung (132) zumindest teilweise innerhalb des Außengewindes (116) realisiert ist.

5. Der Schlauchverbinder (100) nach einem der vorhergehenden Ansprüche, wobei der zweite Körperabschnitt (112) eine Vielzahl von Öffnungen (132) aufweist, die in Umfangsrichtung voneinander beabstandet sind.

6. Der Schlauchverbinder (100) nach Anspruch 5, wobei der zweite Körperabschnitt (112) mindestens vier Öffnungen (132) aufweist.

7. Der Schlauchverbinder (100) nach einem der vorhergehenden Ansprüche, wobei das Aussehen des Schlauchs (108) zumindest am ersten Ende (150) der mindestens einen Öffnung (132) auf eine genaue Befestigung des Schlauchs (108) am ersten Körperabschnitt (106) hinweist.

8. Der Schlauchverbinder (100) nach Anspruch 7, wobei der Schlauch (108) mindestens die Hälfte einer Gesamtlänge (L1) abdeckt, die durch die mindestens eine Öffnung (132) definiert ist, um die genaue Befestigung des Schlauchs (108) am ersten Körperabschnitt (106) anzuzeigen.

9. Der Schlauchverbinder (100) nach Anspruch 7 oder 8, wobei die Abdeckung des zweiten Endes (152) der mindestens einen Öffnung (132) durch die Spannmutter (140) ein Zeichen für ein genaues Einspannen des Schlauches (108) ist.

10. Der Schlauchverbinder (100) nach einem der vorhergehenden Ansprüche, wobei der zweite Körperabschnitt (112) eine Anschlagkante (123) aufweist, die angrenzend an die mindestens eine Öffnung (132) definiert ist.

11. Der Schlauchverbinder (100) nach Anspruch 10, wobei die Anschlagkante (123) als eine kreisförmige Rippe ausgeführt ist, die sich von einer Außenfläche (134) des zweiten Körperabschnitts (112) aus erstreckt.

12. Der Schlauchverbinder (100) nach Anspruch 10 oder 11, wobei eine erste Rippe (136), die an der Spannmutter (140) vorgesehen ist, an der Anschlagkante (123) anliegt, wenn die Spannmutter (140) mit dem zweiten Körperabschnitt (112) gekoppelt ist.

13. Der Schlauchverbinder (100) nach einem der Ansprüche 10 bis 12, wobei die Spannmutter (140) so ausgebildet ist, dass sie das zweite Ende (152) der mindestens einen Öffnung (132) vollständig abdeckt, wenn die erste Rippe (136) an der Anschlagkante (123) anliegt.

14. Der Schlauchverbinder (100) nach einem der vorhergehenden Ansprüche, wobei die Spannmutter (140) so ausgebildet ist, dass sie den Durchgang von Fremdmaterial in das Außengewinde (116) des zweiten Körperabschnitts (112) und das Innengewinde (142) der Spannmutter (140) beschränkt, wenn die e Spannmutter (140) mit dem zweiten Körperabschnitt (112) verbunden ist.

## Revendications

1. Raccord de tuyau (100) comprenant :
un corps (102) comprenant :
une première partie de corps (106) ; et
une seconde partie de corps (112) disposée concentriquement autour de la première partie de corps (106) ;
dans lequel la première partie de corps (106) et la seconde partie de corps (112) définissent un espace (114) entre elles de sorte que l'espace (114) est adapté pour recevoir un tuyau (108) à l'intérieur ;
dans lequel la seconde partie de corps (112) a une section d'extrémité (118) vers une partie d'entrée (120) de l'espace (114) ;
un élément de serrage (124) associé à la seconde partie de corps (112), dans lequel l'élément de serrage (124) comprend une pluralité de griffes de serrage (126) ; et
un écrou de serrage (140) couplé par filetage à la seconde partie de corps (112) ;
dans lequel le raccord de tuyau (100) comprend en outre au moins une ouverture (132) définie sur la seconde partie de corps (112), l'au moins une ouverture (132) s'étendant entre une première extrémité (150) et une seconde extrémité (152),
dans lequel la première extrémité (150) est définie comme un point périphérique le plus proche de la section d'extrémité (118) de la seconde partie de corps (112),
et la seconde extrémité (152) est définie comme un point périphérique le plus éloigné de la section d'extrémité (118) de la seconde partie de corps (112) ;
et dans lequel pour le verrouillage complet du tuyau (108) avec le connecteur de tuyau (100) :
le tuyau (108) est adapté pour être reçu dans l'espace (114) de telle sorte que le tuyau (108) apparaisse au moins à la première extrémité (150) ; et
l'écrou de serrage (140) est adapté pour être couplé par filetage à la seconde partie de corps (112) après de telle sorte que l'écrou de serrage (140) recouvre la seconde extrémité (152) ;
**caractérisé en ce que**
l'ouverture (132) est de forme triangulaire, l'orientation du triangle étant telle qu'elle pointe vers le point périphérique le plus éloigné de la section d'extrémité (118).

2. Raccord de tuyau (100) selon la revendication 1, dans lequel la seconde partie de corps (112) comprend des filetages externes (116) qui s'engagent avec des filetages internes (142) sur l'écrou de serrage (140) pour coupler par filetage l'écrou de serrage (140) et la seconde partie de corps (112).

3. Raccord de tuyau (100) selon la revendication 2, dans lequel l'au moins une ouverture (132) est prévue de manière adjacente aux filetages externes (116) sur la seconde partie de corps (112).

4. Raccord de tuyau (100) selon la revendication 2, dans lequel l'ouverture (132) est réalisée au moins en partie dans les filetages externes (116).

5. Raccord de tuyau (100) selon l'une quelconque des revendications précédentes, dans lequel la seconde partie de corps (112) comprend une pluralité d'ouvertures (132) qui sont espacées circonférentiellement les unes des autres.

6. Raccord de tuyau (100) selon la revendication 5, dans lequel la seconde partie de corps (112) comprend au moins quatre ouvertures (132).

7. Raccord de tuyau (100) selon l'une quelconque des revendications précédentes, dans lequel l'aspect du tuyau (108) au moins à la première extrémité (150) de l'au moins une ouverture (132) est indicatif d'un montage précis du tuyau (108) sur la première partie de corps (106).

8. Raccord de tuyau (100) selon la revendication 7, dans lequel le tuyau (108) recouvre au moins la moitié d'une longueur totale (L1) définie par l'au moins une ouverture (132) pour indiquer le montage précis du tuyau (108) sur la première partie de corps (106).

9. Raccord de tuyau (100) selon les revendications 7 ou 8, dans lequel le recouvrement de la seconde extrémité (152) de l'au moins une ouverture (132) par l'écrou de serrage (140) est indicatif d'un serrage précis du tuyau (108).

10. Raccord de tuyau (100) selon l'une quelconque des revendications précédentes, dans lequel la seconde partie de corps (112) comprend un bord d'arrêt (123) défini de manière adjacente à l'au moins une ouverture (132).

11. Raccord de tuyau (100) selon la revendication 10, dans lequel le bord d'arrêt (123) est réalisé sous la forme d'une nervure circulaire s'étendant depuis une surface extérieure (134) de la seconde partie de corps (112).

12. Raccord de tuyau (100) selon les revendications 10 ou 11, dans lequel une première nervure (136) prévue sur l'écrou de serrage (140) repose contre le bord d'arrêt (123) lorsque l'écrou de serrage (140) est couplé à la seconde partie de corps (112).

13. Raccord de tuyau (100) selon l'une quelconque des revendications 10 à 12, dans lequel l'écrou de serrage (140) est adapté pour recouvrir complètement la seconde extrémité (152) de l'au moins une ouverture (132) lorsque la première nervure (136) repose contre le bord d'arrêt (123).

14. Raccord de tuyau (100) selon l'une quelconque des revendications précédentes, dans lequel l'écrou de serrage (140) est adapté pour restreindre un passage de matériau étranger dans les filetages externes (116) de la seconde partie de corps (112), et les filetages internes (142) de l'écrou de serrage (140) lorsque l'écrou de serrage (140) est couplé à la seconde partie de corps (112).
